# EUROPÄISCHE PATENTSCHRIFT

(11) **EP 0 371 227 B1**
(45) Veröffentlichungstag und Bekanntmachung des Hinweises auf die Patenterteilung: **05.01.1994**
(21) Anmeldenummer: 89117560.6
(22) Anmeldetag: 22.09.1989
(51) Int. Cl.: B62D 51/00

(54) **Deichsel für von Hand geführte Hubwagen und -lader**
Steering shaft for hand-controlled platform vehicles and loaders
Timon pour chariots élévateurs-chargeurs conduits à la main

(30) Priorität: 01.12.1988 DE 3840801
(43) Veröffentlichungstag der Anmeldung: 06.06.1990
(73) Patentinhaber: Dr.Ing.h.c. F. Porsche Aktiengesellschaft, 70435 Stuttgart (DE)
(72) Erfinder: Powell, Robert, D-7530 Pforzheim (DE); Uerlings, Rainer, Dipl.-Ing. (FH), D-7255 Rutesheim (DE); Montanus, Thomas, D-7131 Wurmberg (DE)

(56) Entgegenhaltungen:
- GB-A- 2 009 066
- US-A- 4 444 284

## Beschreibung

Die Erfindung bezieht sich auf eine Deichsel nach dem Oberbegriff des Anspruchs 1.

Es ist ein Lenkkopf an einer Deichsel eines Hubwagens bekannt, der unmittelbar mit einem Stiel der Deichsel verbundene Handhabungsgriffe sowie Betätigungsschalter umfaßt, wobei die Griffe über Bügel am Stiel abgestützt sind. Die Lenkköpfe der Hubwagen sind im Betrieb vielfältigen Belastungen durch unsachgemäße Bedienung und Handhabung ausgesetzt, bei der eine Beschädigung von Teilen des Lenkkopfes erfolgen kann, wodurch der Hubwagen außer Betrieb gesetzt wird.

Aufgabe der Erfindung ist es, einen verbesserten Lenkkopf zu schaffen, der leicht auswechselbar gestaltet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Lenkkopf durch seine Zweiteiligkeit bei einer Beschädigung des die Bedienelemente aufnehmenden Teils des Lenkkopfes, leicht und schnell auswechselbar ist, so daß keine Stillsetzung des Fahrzeugs erforderlich wird.

Um dieses schnelle Auswechseln des einen Elements des Lenkkopfes in einfacher Weise zu erzielen, ist es über zwei Schrauben mit dem Trägerteil am Deichselstiel verbunden. Die Befestigungsschrauben sind ohne Behinderung durch irgendwelche Teile des Lenkkopfes mit einem Schraubenzieher geradlinig zu erreichen.

Durch die besondere Ausbildung der beiden Schalenelemente des Lenkkopfes mit korrespondierenden Abstütznasen und inneinandergreifenden Verbindungsrändern wird eine stabile Baueinheit geschaffen, bei der das mit dem Stiel verbundene Schalenelement die am Lenkkopf auftretende Kräfte im wesentlichen aufnimmt.

Damit auch eine schnelle und problemlose Trennung und Verbindung der elektrischen Leitungen erfolgt, sind die Zuführleitungen mit den weiteren Leitungen zu den Bedienungsschaltern über einen oder mehrere Stecker verbunden.

Ein Ausführungsbeispiel der Erfindung ist in der Zeichnung dargestellt und wird im folgenden näher beschrieben.

Es zeigen:

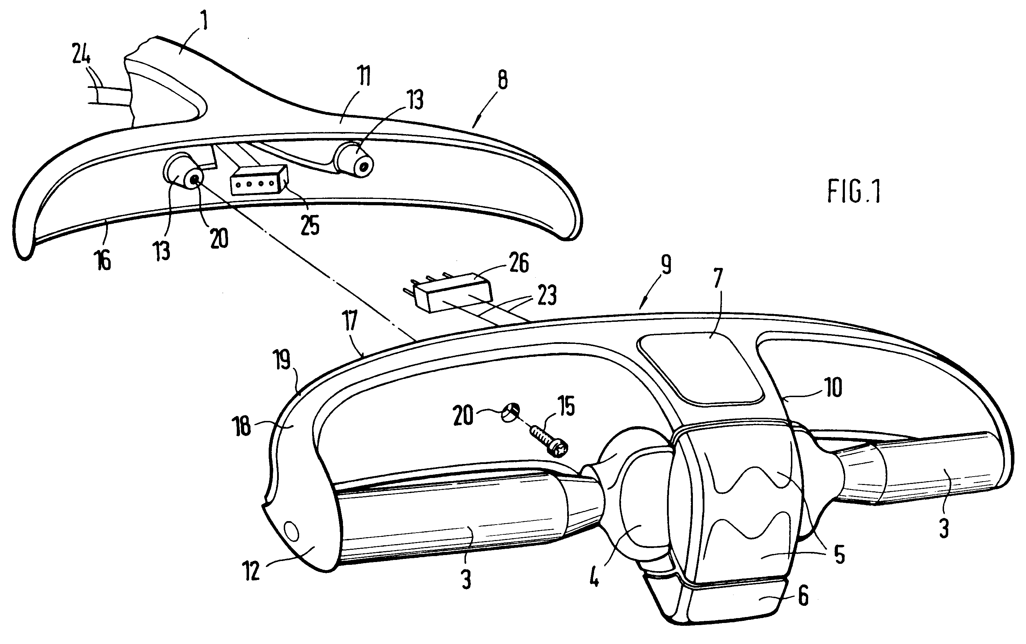

- Fig. 1: eine schaubildliche Darstellung eines zweiteiligen Lenkkopfes, bestehend aus einem Trägerteil und einem Schalenelement,

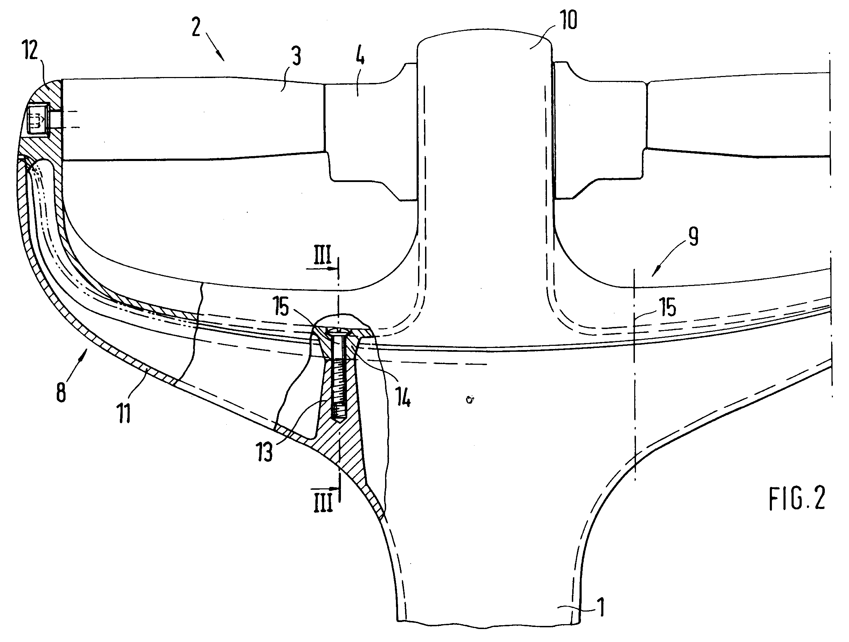

- Fig. 2: eine Draufsicht des Lenkkopfes und
- Fig. 3: einen Schnitt nach der Linie III-III der Fig. 2 durch den Lenkkopf im Bereich des Verbindungsbereiches über die Befestigungsschrauben.

Ein nicht näher dargesteller Hubwagen bzw. Hublader weist zum Bedienen und Fahren eine Deichsel 1 mit einem Lenkkopf 2 auf. Dieser umfaßt zwei Handgriffe 3 zum Führen und Bedienelemente zur Betätigung auf, wie z.B. einen Fahrregler 4, einen Hub- und Senkschalter 5, einen Notschalter 6 und eine Hupe 7.

Der Lenkkopf 2 besteht aus zwei lösbar miteinander verbundenen Schalenelementen 8 und 9. Das erste Schalenelement 8 ist ein Teil der Deichsel 1 und mit dieser einteilig ausgeführt und bildet ein Trägerteil 11 für das zweite Schalenelement 9. Dieses weist ein mittiges Horn 10 auf, das die Schalter und Regler aufnimmt und an dem die Handgriffe 3 gelagert sind, welche sich mit ihrem anderen Ende an einem einwärts gebogenen Endteil 12 des Schalenelements 9 abstützen.

Im Trägerteil 11 sind zu beiden Seiten des Stieles der Deichsel 1 vorragende Abstütznasen 13 angeordnet, denen weitere Abstütznasen 14 des zweiten Schalenelements 9 gegenüberstehen. Die Stirnfläche der miteinander korrespondierenden Nasen 13, 14 stützen sich aufeinander ab und sind über Befestigungsschrauben 15 miteinander verbunden.

Die umlaufenden Stirnkanten 16, 17 der beiden Schalenelemente 8 und 9 sind ineinandergreifendend ausgeführt, so daß sich eine durchgehende bündige Außenoberfläche zwischen dem ersten und dem zweiten Schalenelement 8 und 9 ergibt. Hierzu weist das zweite Schalenelement 8 an seinem abgewinkelten Verbindungsschenkel 18 eine umlaufende Kante 17 mit einer Absetzung 19 auf, in der die umlaufende Kante 16 des Trägerteils 11 formschlüssig liegt.

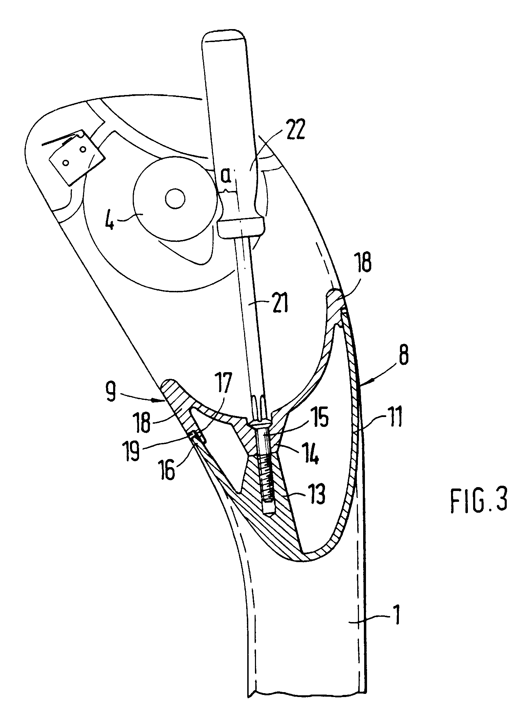

Die Abstütznasen 13 und 14 der beiden Schalenelemente 8 und 9 sind mit Aufnahmebohrungen 20 für die Schrauben 15 versehen, dessen Achsen 21 mit einem Abstand a zum Schalter 4 bzw. zum Griff 3 verlaufen. Wie Fig. 3 näher zeigt ist dieser Abstand so groß gewählt, daß die Schrauben 15 mit einem Schraubenzieher 22 ohne Behinderung von Teilen des Lenkkopfes gelöst und eingeschraubt werden können. Hierdurch ist eine schnelle Auswechselbarkeit des zweiten Schalenelements 9 gewährleistet.

Zur Trennung der elektrischen Verbindungskabel 23, 24 zwischen dem Trägerteil 11 und dem zweiten Schalenelement 9 sind die elektrischen Leitungen über Stecker 25, 26 miteinander verbindbar.

## Patentansprüche

1. Deichsel für von Hand geführte und mit einem Fahrantrieb versehene Hubwagen und -lader, der am freien Ende seiner Deichsel (1) einen Handgriffe (3) umfassenen Lenkkopf (2) aufweist, an dem Bedienelemente (4, 5, und 6) für den Fahr- und Hubbetrieb angeordnet sind und der Lenkkopf (2) über Befestigungsschrauben (15) lösbar miteinander verbindbare Trägerteile (Schalenelemente 8, 9) umfaßt, wobei das eine innenliegende Trägerteil mit der Deichsel (1) fest verbunden und das zweite außenliegende Trägerteil die Handgriffe (3) sowie die Bedienelemente (4, 5, 6) aufweist, **dadurch gekennzeichnet,** daß die Trägerteile aus sich quer zum Stiel (1) erstreckenden Schalenelementen (8, 9) halbbogenförmigen Querschnitts bestehen und daß zwischen einem abgewinkelten endseitigen Verbindungsschenkel (18) des außenliegenden Schalenelementes (8) und einem mittigen Horn (10) jeweils der Handgriff (3) sowie der Fahrregler (4) fluchtend angeordnet sind und daß das außenliegende Schalenelement (9) eine umlaufende, mit einer Absetzung (19) versehenen Stirnkante (17) aufweist, in die eine von außen übergreifende Stirnkante (16) des innenliegenden Schalenelementes (8) derart formschlüssig eingreift, daß die Außenflächen der beiden Schalenelemente (8 und 9) bündig zueinander verlaufen.

2. Deichsel nach Anspruch 1, **dadurch gekennzeichnet,** daß das Schalenelement (8) zu beiden Seiten eines Stiels der Deichsel (1) im Abstand angeordnete Abstütznasen (13) umfaßt, denen weitere Abstütznasen (14) des zweiten Schalenelements (9) anliegend gegenüberstehen und in den Nasen (13, 14) die die beiden Schalenelemente (8, 9) miteinander verbindenden Befestigungsschrauben gehalten sind, wobei die Mittenachsen (21) der Nasen (13,14) mit einem Abstand (a) zum Schalter (4) bzw. zum Handgriff (3) verlaufen.

## Claims

1. A steering shaft for manually guided lifting trucks and loaders provided with a travelling mechanism having at the free end of the steering shaft (1) thereof a steering head (2) which comprises handles (3) and on which control members (4, 5 and 6) for travelling and lifting are arranged and which comprises support parts (shell members 8, 9) detachably connected to each other by way of fastening screws (15), wherein the inner support part is rigidly joined to the steering shaft (1) and the second outer support part comprises the handles (3) and the control members (4, 5 and 6), **characterized in that** the support parts comprise shell members (8, 9) of semicircular shape extending transversely to the column (1), and the handle (3) and the travel control (4) are respectively arranged in alignment between an angled connecting arm (18) at the end of the outer shell member (8) [*sic*] and a central web (10), and the outer shell member (9) comprises a continuous front edge (17) which is provided with an offset (19) and into which a front edge (16) of the inner shell member (8) engaging over from the outside engages in a positively locking manner in such a way that the external faces of the two shell members (8 and 9) extend flush with each other.

2. A steering shaft according to Claim 1, **characterized in that** the shell member (8) comprises support projections (13) which are arranged on both sides of a column of the steering shaft (1) at a distance and opposite and adjacent to which further support projections (14) on the second shell member (9) are arranged and in which the fastening screws connecting the two shell members (8, 9) together are held, the median axes (21) of the projections (13, 14) extending at a distance (a) from the switch (4) or the handle (3).

## Revendications

1. Timon pour chariots élévateurs et chargeurs élévateurs guidés à la main et dotés d'un mécanisme de translation, qui à son extrémité libre comporte une tête d'articulation (2) avec poignées (3) sur laquelle sont montés des éléments de commande (4, 5 et 6) pour le mécanisme de translation et le mécanisme de levage et la tête d'articulation (2) comporte des éléments de support (éléments en coque 8, 9) assemblés entre eux de manière amovible au moyen de vis de fixation (15), un élément de support intérieur étant solidaire du timon (1) et le second élément de support extérieur comportant les poignées (3) ainsi que les éléments de commande (4, 5, 6), caractérisé en ce que les éléments de support sont constitués d'éléments en coque (8, 9) de section transversale en demi-arc s'étendant transversalement à la barre (1) et en ce que la poignée (3) et le régulateur de marche (4) sont prévus alignés entre une aile de liaison (18) terminale, coudée, de l'élément en coque (8) extérieur et une corne (10) centrale et en ce que l'élément en coque (9) extérieur présente un bord frontal (17) périphérique, pourvu d'un palier (19), bord dans lequel s'engage par concordance de forme un bord frontal (16), passant de l'extérieur par dessus, de l'élément en coque (8) intérieur, de manière que les surfaces extérieures des deux éléments en coque (8 et 9) se trouvent dans un même plan.

2. Timon selon la revendication 1, caractérisé en ce que l'élément en coque (8) comprend des deux côtés d'une barre du timon (1), des ergots d'appui (13), espacés, contre lesquels s'appliquent, en face, d'autres ergots d'appui (14) du second élément en coque (9) et en ce que dans les ergots (13, 14) sont maintenues des vis de fixation reliant entre eux les deux éléments en coque (8, 9), les axes médians des ergots (13, 14) s'étendant à une distance (a) de l'interrupteur (4) ou de la poignée (3).
